# EUROPEAN PATENT APPLICATION

(11) **EP 2 039 734 A1**
(43) Date of publication of application: **25.03.2009**
(21) Application number: 07017221.8
(22) Date of filing: 03.09.2007
(51) Int. Cl.: C09J 5/00, C09J 175/04, B43K 7/00

(54) **Aqueous adhesive and use thereof in a ballpoint pen type bonding utensil**

(71) Applicant: TOMBOW PENCIL CO., LTD., Tokyo 114-8583 (JP)
(72) Inventor: Nishio, Miyuki, Soka-shi, Saitama 340-0011 (JP)
(74) Representative: Schmidt, Horst

(57) **Abstract**

An aqueous adhesive suitable for use in a ballpoint pen type bonding utensil is described which has a little dripping and is discharged smoothly thereby allows the adhesive to be applied properly to fine portions in a suitable amount, has good sense of use, is excellent in adhesiveness especially to buttons and metals, and is not sticky when it adheres to a hand and excellent in smooth feel to touch, when it is used while being filled in a ballpoint pen type bonding utensil. The aqueous adhesive can be loaded into a ballpoint pen provided with a ball having a diameter of from 0.7 to 1.2 mm at the tip and is characterized by tat it contains water-dispersion type polyurethane resin emulsion as the primary ingredient.

## Description

### BACKGROUND OF THE INVENTION

### 1. FIELD OF THE INVENTION

The present invention relates to an aqueous adhesive. More specifically, the invention relates to an aqueous adhesive suitable for use in a ballpoint pen type bonding utensil in that has a little dripping and is discharged smoothly, allows the adhesive to be applied properly to fine portions in a suitable amount, has good sense of use, is excellent in adhesiveness, and is not sticky when it adheres to a hand and excellent in smooth feel to touch, when it is used while being filled in a ballpoint pen type bonding utensil.

### 2. BACKGROUND ART

Heretofore, for use in homes and offices, there are adhesives in solid state and in liquid state. Adhesives in solid state dry quickly, but are poor in performance of wetting substances to be adhered (wetting property), and have limitations in adhesiveness, therefore there is such drawback that it may be detached in the case of processed paper such as resin coated paper to lack acceptance for adhesiveness. In addition, in the case of conventional adhesives, they are sticky when they adhere to a hand and the hand must be washed before starting to do subsequent works.

Recently, emulsion type adhesives that employ acrylic resin have appeared. There are such types that an adhesive is filled in a vessel provided with a rod-like application body composed of an open-cell foam such as sponge at the tip, wherein, by pressing the application body to the surface to be adhered when it is used, a built-in valve mechanism opens to supply the adhesive in the vessel to an application body to make the application possible, and that a vessel is formed with a flexible material and the vessel is pressed when it is used to reduce the internal volume, thereby supplying the adhesive to the application body by the pressure.

However, bonding utensils having a rod-like application body composed of sponge or the like require some kind of preoperation such that the application body is strongly pressed or the vessel is pressed upon application, which is inconvenient. Further, since these bonding utensils have an application body with a large tip area, they are suitable for applying an adhesive to a large area, but not suitable for applying it properly to fine portions. Therefore, ballpoint pen type bonding utensils, which can apply properly an adhesive to fine portions, attract attention.

For an adhesive to be loaded in ballpoint pen type bonding utensils, there are disclosed such water-soluble polymer as starch and polyvinyl alcohol (JP-A-2004-122558, paragraph [0007] etc.), and acrylic-based resin emulsion (JP-A-9-165562, paragraph [0008] etc.; JP-A-2000-85298, claim 1 etc.; JP-A-2000-239628, claim 1 etc.; JP-A-2004-122558, paragraph [0007] etc.). However, when a water-soluble polymer is loaded, there are such problems that the water-soluble polymer is not discharged smoothly from the bonding utensil, and that the adhesive can not be applied properly to fine portions. On the other hand, in the case of acrylic-based resin emulsion, although aforementioned problems are going to be solved, there is such problem as poor sense of use, for example, adhesiveness is poor to metal and plastic other than paper, and the adhesive is sticky when it adheres to a hand.

### SUMMARY OF THE INVENTION

An object of the present invention is to provide an improved aqueous adhesive suitable for use in a ballpoint pen type bonding utensil. Another object of the present invention is to provide an aqueous adhesive for ballpoint pen type bonding utensil suitable to overcome the above-mentioned problems of conventional techniques. In particular it is an object of the present invention to provide an aqueous adhesive which has one or more or all of the following properties: a little dripping and which can be discharged smoothly thereby allows the adhesive to be applied properly to fine portions in a suitable amount, which has good sense of use, which is excellent in adhesiveness especially to buttons and metals, and which is not sticky when it adheres to a hand and excellent in smooth feel when touched and when it is used, while it can be filled in a ballpoint pen type bonding utensil.

It has been found that these and other objects can be solved by an adhesive that contains water-dispersion type polyurethane resin emulsion as the primary ingredient. This adhesive has specific properties for use as a ballpoint pen type bonding utensil.

Namely in accordance with the present invention there is provided an aqueous adhesive for ballpoint pen type bonding utensil to be loaded into a ballpoint pen provided with a ball having a diameter of from 0.7 to 1.2 mm at the tip, said adhesive containing water-dispersion type polyurethane resin emulsion as the primary ingredient.

For the aqueous adhesive for ballpoint pen type bonding utensil of the invention, the discharge amount of the ballpoint pen into which the aqueous adhesive of the invention is loaded is preferably in the range of from 100 to 360 mg/5m, and the viscosity of the adhesive is preferably in the range of from 8 to 135 mPa·s.

Polyurethane resin for use in the invention preferably contains polyurethane resin having at least one silanol group in a molecule as an indispensable ingredient, and preferably the polyurethane resin is a reaction product of a polyisocyanate ingredient, a polyol ingredient and a hydrolysable silicon group-containing compound. Preferably, the polyisocyanate ingredient is alicyclic diisocyanate, and the polyol ingredient is polyether-based polyol or polyester-based polyol. The water-dispersion type polyurethane resin emulsion for use in the invention may contain strongly basic tertiary amine as a curing catalyst. The strongly basic tertiary amine preferably has pKa of 11 or more. More preferably, the strongly basic tertiary amine is 1,8-diazabicyclo[5.4.0]undecene-7 (DBU), or 1,6-diazabicyclo[3.4.0]nonen-5.

The aqueous adhesive for ballpoint pen type bonding utensil of the invention shows a little dripping and is discharged smoothly, and allows the adhesive to be applied properly to fine portions in a suitable amount when it is used while being filled in a ballpoint pen type bonding utensil. The adhesive is excellent especially in the adhesion to metals and buttons, in addition to the adhesion to, needless to say, various types of paper such as wood-free paper, copying paper, cardboard, Japanese paper and corrugated board. It is not sticky when it adheres to a hand and excellent in smooth feel to touch, therefore it is mainly suitable for paper craft works. Further, for office use, by laminating together corners of some sheets of paper, the bonding utensil serves as a replacement for a stapler and is environmentally friendly because the laminated paper can be thrown away as it stands.

### DESCRIPTION OF PREFERRED EMBODIMENTS

In the aqueous adhesive for ballpoint pen type bonding utensil of the present invention, the water-dispersion type polyurethane resin emulsion being the primary ingredient may be a material in which polyurethane resin is dispersed in water to be dissolved or to form emulsion, wherein one type of polyurethane resin or a combination of two or more types may be used.

Examples of such water-dispersion type polyurethane resin emulsion include a one-liquid type polyurethane dispersion and a one-liquid type self-crosslinkable aqueous polyurethane dispersion formed by dispersing aqueous urethane resin or self-crosslinkable aqueous urethane resin in water. For the one-liquid type polyurethane dispersion, for example, there are such aqueous urethane resin as are formed by dispersing urethane elastomer in water, wherein anionic or nonionic one is obtained depending on the type of a hydrophilic group introduced. Specific examples include Takelack W-6061 (anionic), Takelack W-6020 (anionic), Takelack W-615 (anionic) and Takelack W-511 (anionic) (all of these are manufactured by MITSUI TAKEDA CHEMICALS). The one-liquid type self-crosslinkable aqueous polyurethane resin dispersion is one formed by dispersing self-crosslinkable aqueous urethane resin in water. Specific examples include Takelack WS-6021 (anionic), Takelack WS-5000 (anionic), Takelack WS-5100 (anionic) and Takelack WS-4000 (anionic) (all of these are manufactured by MITSUI TAKEDA CHEMICALS).

Among these polyurethane resin dispersions, an emulsion in which a polyurethane resin having at least one silanol group in a molecule (hereinafter, it may be referred to as silanol group-containing polyurethane resin) is dispersed as fine particles is excellent in adhesiveness and preferred.

The silanol group in a silanol group-containing polyurethane resin is generated by the hydrolysis of a hydrolysable silicon group of a compound used for the reaction in an aqueous phase, the compound containing at least one active hydrogen group capable of reacting with an isocyanate group and hydrolysable silicon group. The silanol group is introduced to the silanol group-containing polyurethane resin via an urethane bond. The bond is formed by reacting a compound having at least two hydroxyl groups per one molecule (polyol ingredient), a compound having at least two isocyanate groups per one molecule (isocyanate ingredient), and a compound having at least one active hydrogen group capable of reacting with an isocyanate group and hydrolysable silicon group per one molecule (hydrolysable silicon group-containing compound). More preferably, it is obtained according to a method described in JP-A-9-12864, paragraphs from [0031] to [0064].

A silanol group-containing polyurethane resin to which such hydrophilic group as a carboxyl group or a sulfonate group has been introduced is preferred from the viewpoint of the stability of the resin in an aqueous phase.

Examples of the compound having at least two hydroxyl groups per one molecule include polyester polyol, polyether polyol, polyether ester polyol, polyester amide polyol, acrylic polyol, polycarbonate polyol, polyhydroxy alkane, ricinus oil, polyurethane polyol and mixtures thereof. Among the polyols, polyether-based polyol and polyester-based polyol are preferred from the viewpoint of having no sticky feeling.

For the compound having at least two isocyanate groups per one molecule, any of aliphatic, alicyclic, aromatic and araliphatic series may be used. Or, mixtures thereof may also be used. Examples of aliphatic diisocyanate include trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, 2,6-diisocyanate methylcaproate and mixtures thereof. Examples of alicyclic diisocyanate include 1,3-cyclopentane diisocyanate, 1,4-cyclohexane diisocyanate, 1,3-cyclohexane diisocyanate, 3-isocyanatemethyl-3,5,5-trimethylcyclohexyl isocyanate (isoholon diisocyanate), 4,4'-methylene bis(cyclohexyl isocyanate), methyl-2,4-cyclohexane diisocyanate, methyl-2,6-cyclohexane diisocyanate, 1,4- or 1,3-bis(isocyanatemethyl) cyclohexane and mixtures thereof (hydrogenated xylylene diisocyanate), and mixtures thereof. Examples of aromatic diisocyanate include m-phenylene diisocyanate, p-phenylene diisocyanate, 4,4'-diphenyl diisocyanate, 1,5-naphthalene diisocyanate, 4,4'-diphenylmethane diisocyanate, 2,4- or 2,6-tolylene diisocyanate and mixtures thereof, 4,4'-toluidine diisocyanate, dianisidine diisocyanate, 4,4'-diphenylether diisocyanate and mixtures thereof. Examples of araliphatic diisocyanate include 1,3- or 1,4-xylylene diisocyanate and a mixture thereof, ω, ω'-diisocyanate -1,4-diethylbenzene, 1,3- or 1,4-bis(1-isocyanate -1-methylethyl) benzene and mixtures thereof. Examples of triisocyanate include triphenylmethane-4,4',4"-triisocyanate, 1,3,5-triisocyanate benzene, 2,4,6-triisocyanate toluene, and 1,3,5-triisocyanate hexane. Examples of polyisocyanate monomer include 4,4'-diphenyldimethylmethane-2,2'-5,5'-tetraisocyanate. And, dimmer and trimer derived from the polyisocyanate monomer can be mentioned. Among these isocyanate ingredients, alicyclic diisocyanate is preferred from the viewpoint of being not sticky and excellent in smooth feel to touch, and among the alicyclic diisocyanate most preferred is hydrogenated xylylene diisocyanate.

The aforementioned polyurethane dispersion may contain strongly basic tertiary amine. The amine acts as a catalyst for forming a siloxane bond when the silanol group-containing polyurethane resin is formed into a film, therefore the closslinking is accelerated at temperatures around room temperature to form a coated film excellent in water resistance and solvent resistance, thereby giving an aqueous adhesive that is not sticky and excellent in smooth feel to touch.

The strongly basic tertiary amine is not particularly limited, but from the viewpoint of accelerating the crosslinking at temperatures within room temperature range, one having pKa of 11 or more is preferred. Examples of the strongly basic tertiary amine include 1,8-diazabicyclo[5.4.0]undecene-7 (DBU), and 1,6-diazabicyclo[3.4.0]nonen-5.

The content of the strongly basic tertiary amine is, relative to 100 parts by mass (hereinafter, abbreviated to "part") of silanol group-containing polyurethane resin (solid content), preferably from 0.001 to 10 parts, more preferably from 0.001 to 7 parts, further preferably from 0.001 to 5 parts. When the strongly basic tertiary amine is incorporated in such content, the curing speed is good and the solvent resistance and water resistance of a formed coated film tends to be good.

Examples of the self-emulsified urethane resin thus obtained, that is, aqueous urethane resin (composition) containing silanol group-containing polyurethane resin that are available as commercial products include "Takelack WS-Series" (by Mitsui Takeda Chemicals) that contain a silanol group in a side chain and are anionic.

In the invention, when preparing the aqueous adhesive for ballpoint pen type bonding utensil, it is possible to blend one type or a combination of two or more types selected from water-dispersion type polyurethane resin emulsions, preferably silanol group-containing water-dispersion type polyurethane resin emulsions. When a silanol group-containing polyurethane resin and strongly basic tertiary amine are commercially available as an aqueous solution or an aqueous emulsion that contains the two, the aqueous adhesive of the invention can be prepared by using it as the primary ingredient and blending other ingredients according to need.

The content of the water-dispersion type polyurethane resin emulsion is from 75 to 95% by mass as the emulsion relative to the total amount of the adhesive, preferably from 80 to 95% by mass. When it is incorporated in such amount, the adhesive has sufficient adhesion performance, not too high viscosity, is discharged smoothly, and can be coated to fine regions properly.

In the aqueous adhesive of the invention, for the purpose of preventing the drying of the adhesive and improving the storage stability, preferably a humectant is blended. Examples of the humectant include polyhydric alcohols such as ethylene glycol, diethylene glycol, triethylene glycol, propylene glycol, dipropylene glycol, tripropylene glycol, butylene glycol, hexylene glycol, glycerin, diglycerin and tetralin; ethers such as ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monomethyl ether, propylene glycol monoethyl ether, dipropylene glycol monomethyl ether, dipropylene glycol monoethyl ether, diethylene glycol monomethyl ether acetate, diethylene glycol monoethyl ether acetate, diethylene glycol monopropyl ether acetate, diethylene glycol monobutyl ether acetate, ethylene glycol monophenyl ether and propylene glycol monophenyl ether; alcohols such as hexanol; and aqueous high boiling point solvents such as polyethylene glycol, N-methyl-2-pyrrolidone and 2-pyrrolidone. These humectants may be used independently or while combining two or more of these.

Among the aforementioned compounds, from the viewpoint of excellent moisturizing action, preferred are polyhydric alcohols such as ethylene glycol, propylene glycol, butylene glycol, hexylene glycol and glycerin; alcohols such as hexanol; aqueous high boiling point solvents such as polyethylene glycol and N-methyl-2-pyrrolidone, and in particular glycerin is preferred.

The content of a humectant in the adhesive is preferably from 5 to 25% by mass relative to the total amount of the adhesive, more preferably from 5 to 20% by mass. The humectant incorporated in such amount gives an aqueous adhesive that shows a little loss in quantity of volatile portions with the lapse of time, has good storage stability, and shows no degradation of adhesion performance.

The viscosity of the aqueous adhesive of the invention is preferably in the range of from 8 to 135 mPa·s (25°C). For measuring the viscosity a so called cone-and-plate viscosimeter having a cone rotor type 1°34'X R24 which is available from Toki Sangyo Co., Ltd./ Japan, type TVE-22L was used; the measuring range was "M" and the measuring temperature was 25°C. By controlling the viscosity in this range, the adhesive is given reasonable fluidity, and is discharged smoothly with a little dripping to make it possible to apply the adhesive in an appropriate amount properly to fine portions.

To the aqueous adhesive of the invention, additionally according to need, such additives as dye, a surfactant, an antiseptic agent, a mildewproof agent, a pH adjusting agent or a defoaming agent can be added arbitrarily to such an extent that does not inhibit the effect of the invention.

The preparation of the aqueous adhesive of the invention can be carried out easily by mixing with a publicly known mixer such as a propeller type stirrer or a homogenizer.

The aqueous adhesive for ballpoint pen type bonding utensil of the invention can be loaded into the all types of ballpoint pen type bonding utensils, including bonding utensils with a spring, needless to say, and also bonding utensils without a spring because the adhesive shows no dripping as compared with conventional adhesives. For the ballpoint pen into which the aqueous adhesive is to be loaded, ones of conventional types with a ball having a diameter of from 0.7 to 1.2 mm can be used.

The amount to be discharged when the adhesive is loaded is preferably determined to be in the range of from 100 to 360 mg/5m by the selection of the adhesive or controlling the blending amount. This range of the amount allows the adhesive to be discharged smoothly with a little dripping and to be coated properly to fine portions. Here, the discharged amount is a value obtained by the measurement with a scanning device.

### EXAMPLES

Hereinafter, the present invention is described more specifically while citing Examples, but the invention is not limited to these Examples. In the following Examples, "% by mass" and "part by mass" are abbreviated to "%" and "part" respectively, if no particular reference is made.

### Example 1

| | |
|---|---|
| Following ingredients were stirred and mixed to give an aqueous adhesive for ballpoint pen type bonding utensil | |
| Glycerin | 10.0 parts |
| Mildew-proof agent | 0.2 part |
| One-liquid type self-crosslinkable aqueous polyurethane resin (by Mitsui Takeda Chemicals, trade name: Takelack WS- 5000, isoholon diisocyanate/polyester-based, solid content: 30%) | |
| | 89.8 parts |

### Example 2

An aqueous adhesive for ballpoint pen type bonding utensil was obtained by stirring and mixing respective ingredients in the same way as in Example 1 except for using a one-liquid type self-crosslinkable aqueous polyurethane resin (by Mitsui Takeda Chemicals, trade name: "Takelack WS-6021", hydrogenated xylylene diisocyanate/polyether-based, solid content: 30%).

### Example 3

An aqueous adhesive for ballpoint pen type bonding utensil was obtained by stirring and mixing respective ingredients in the same way as in Example 1 except for using a one-liquid type self-crosslinkable aqueous polyurethane resin (by Mitsui Takeda Chemicals, trade name: "Takelack WS-5100", isoholon diisocyanate/polycarbonate-based, solid content: 30%).

### Example 4

An aqueous adhesive for ballpoint pen type bonding utensil was obtained by stirring and mixing respective ingredients in the same way as in Example 1 except for using a one-liquid type self-crosslinkable aqueous polyurethane resin (by Mitsui Takeda Chemicals, trade name: "Takelack WS-4000", hydrogenated xylylene diisocyanate/polycarbonate-based, solid content: 30%).

### Comparative Example 1

A commercially available product manufactured by A company (acrylic emulsion-based) was used.

### Comparative Example 2

A commercially available product manufactured by B company (acrylic emulsion-based) was used.

### Comparative Example 3

A commercially available product manufactured by C company (acrylic emulsion-based) was used.

### Comparative Example 4

A commercially available product manufactured by D company (acrylic emulsion-based) was used.

Each of the aqueous adhesives for ballpoint pen type bonding utensil thus obtained was loaded into a pen body of J-Ball (ball diameter: 1.0 mm, discharge amount: 250 mg/5m; manufactured by Tombow), which was subjected to the following adhesion tests.

In an environmental condition of 23°C, 60% RH, wood-free paper, copying paper (whiteness: 70%), Japanese paper (figured paper), cardboard (construction paper), corrugated board respectively were bonded with each other, and, further, a button and metal parts (slide clip and thread-accepting round washer) were stuck to wood-free paper respectively, which were removed after 30 seconds to observe whether or not the paper were ruptured. The results were evaluated according to the following standard, which are shown in Table 1.
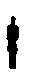 : rupture of the paper was observed
ρ: tearing off, not being lead to rupture, of the paper was observed
×: no rupture of the paper was observed

**TABLE 1**

| | | | Example | | | | Comparative Example | | | |
|---|---|---|---|---|---|---|---|---|---|---|
| | | | 1 | 2 | 3 | 4 | 1 | 2 | 3 | 4 |
| Polyurethane resin emulsion | | Isocyanate | IPDI | H6XDI | IPDI | H6XDI | Commercially available acrylic-based resin emulsion | | | |
| | | Polyol | Polyester- based | Polyether- based | Polycarbonate- based | Polycarbonate- based | | | | |
| | | Solid content (%) | 30 | 30 | 30 | 30 | | | | |
| Viscosity of adhesive (mPa·s) | | | 20 | 200 | 20 | 20 | 36 | 30 | 80 | 15 |
| Blending amount (part) | | Polyurethane resin emulsion | 89.8 | 89.8 | 89.8 | 89.8 | - | - | - | - |
| | | Glycerin | 10.0 | 10.0 | 10.0 | 10.0 | - | - | - | - |
| | | Mildewproof agent | 0.2 | 0.2 | 0.2 | 0.2 | - | - | - | - |
| Evaluation result | Woodfree paper | | 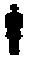 | 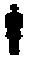 | 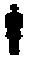 | 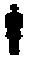 | 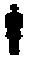 | 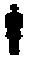 | 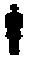 | 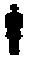 |
| | Copying paper (whiteness: 70%) | | 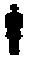 | 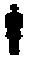 | 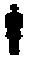 | 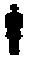 | ρ | 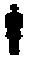 | 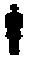 | 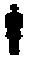 |
| | Japanese paper (figured paper) | | 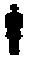 | 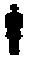 | ρ | ρ | ρ | ρ | ρ | 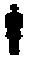 |
| | Cardboard (construction paper) | | 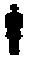 | 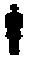 | 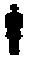 | 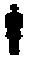 | 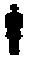 | 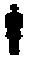 | 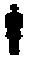 | 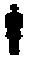 |
| | Corrugated board | | 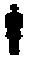 | 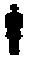 | 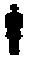 | 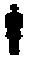 | ρ | 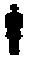 | 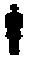 | 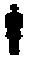 |
| | Button | | 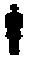 | ρ | ρ | ρ | × | × | × | ρ |
| | Metal (slide clip) | | 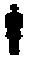 | 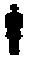 | 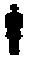 | ρ | × | × | × | ρ |
| | Metal (thread-accepting round washer) | | 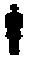 | 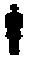 | 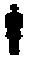 | p | × | × | × | ρ |

As it becomes clear from the results shown in Table 1, when the adhesive of the invention is loaded, excellent adhesiveness is exerted between paper and other substance, needless to say, as well as between papers, and there is no rapture of paper when the adhered paper is removed, therefore lamination can be easily repeated even when the previous lamination was unsuccessful.

The ballpoint pen type bonding utensil loaded with the aqueous adhesive for ballpoint pen type bonding utensil of the invention can be widely utilized for paperwork in offices, shops for handicraft or hobby and factories, and for paper craft works in homes and culture centers.

The above description of preferred embodiments has been given by way of example. From the disclosure given, those skilled in the art will not only understand the present invention and the attendant advantages, but will also find apparent various changes and modifications to the structures disclosed. It is sought, therefore, to cover all such changes and modifications as fall within the spirit and scope of the invention, as defined by the appended claims, and equivalents thereof.

## Claims

1. An aqueous adhesive having as a primary ingredient a water-dispersion type polyurethane resin emulsion.

2. The aqueous adhesive according to claim 1, wherein the viscosity thereof is from 8 to 135 mPa·s.

3. Use of an aqueous adhesive having as a primary ingredient a water-dispersion type polyurethane resin emulsion in a ballpoint pen type bonding utensil at the tip thereof being provided with a ball having a diameter of between 0.7 and 1.2 mm, as an application member for applying the adhesive to a substrate.

4. The ballpoint pen type bonding utensil according to claim 3, wherein the discharge amount value of the ballpoint pen is in the range of from 100 to 360 mg/5m.

5. The ballpoint pen type bonding utensil according to claim 3, wherein the viscosity of the aqueous adhesive is from 8 to 135 mPa·s.
